# EUROPEAN PATENT SPECIFICATION

(11) **EP 3 059 900 B1**
(45) Date of publication and mention of the grant of the patent: **29.11.2017**
(21) Application number: 14797136.0
(22) Date of filing: 05.05.2014
(51) Int. Cl.: H04L 12/24

(54) **NETWORK SERVICE TEMPLATE MANAGEMENT METHOD AND DEVICE**
VERFAHREN UND VORRICHTUNG FÜR EIN NETZWERKDIENSTSCHABLONENMANAGEMENT
PROCEDE ET DISPOSITIF DE GESTION DE MODELE DE SERVICE DE RESEAU

(30) Priority: 15.11.2013 CN 201310574702
(43) Date of publication of application: 24.08.2016
(73) Proprietor: ZTE Corporation, Shenzhen, Guangdong 518057 (CN)
(72) Inventor: CHU, Junsheng, Shenzhen Guangdong 518057 (CN)
(74) Representative: Awapatent AB
(86) International application number: PCT/CN2014/076773
(87) International publication number: WO 2014/183568

(56) References cited:
- CN-A- 1 835 448
- CN-A- 101 222 766
- CN-A- 102 088 475
- CN-B- 101 263 477
- US-A1- 2007 294 364
- US-A1- 2011 320 605
- US-A1- 2013 159 987
- US-B1- 7 418 656

## Description

### Technical Field

The present invention relates to the field of communications, and more particularly, to a network service template management method and device.

### Background of the Related Art

With the development of telecommunication network functions and services, various types of network elements deployed in the network are also increasing. The increasing number of network elements also brings a lot of problems, for example, there are various types of platforms, and the maintenance is complex; there is resource waste due to no hardware sharing; new services require the new hardware to support, which increase time to market (TTM), and the like.

In recent years, the cloud computing technology has been developed rapidly, and the construction and maintenance costs can be effectively reduced through the cloud computing technology. The cloud computing hardware platform generally uses common or customized servers, the hardware difference is small, the resources are fully shared, which reduces the capital expenditure (CAPEX) for equipment purchasing, the centralized construction, deployment, and maintenance of the hardware devices reduce operation, maintenance and management expenditure (OPEX); the virtualization technology achieves the software and hardware decoupling, and resources are allocated as needed, which improves the resource utilization. At the same time, the virtualization technology can be used to realize a flexible allocation of resources and an automatic distribution of the mirror image, which improves the service deployment efficiency.

The ultimate object of the network functions virtualization (NFV) technology is to provide network functions in the industry standard X86 based servers, memories and switching devices to replace customized devices provided by the traditional telecom equipment manufacturers. The resulting benefits are, on the one hand, the x86 standard-based IT devices have low cost and can save huge investment costs for the operators; on the other hand, the open API interface can also help the operators to open more telecommunications infrastructure network capabilities; it is to uniformly schedule the resources, flexibly allocate the resources and deploy the network to ensure the quality of service; the network scale achieves fast and flexible adjustments, meets the dynamic and real-time capacity expansion and reduction requirements of the system.

The network service template is an important resource provided to users for quickly creating and flexibly managing network services. The network service template comprises service topology information and network service features required for deploying the network services. The network service template administrator is responsible for the lifetime management of the network service template, including registration of the network service template, that is, providing the network service template to the user for quickly generating network services; the modification of the network service template is, namely, fixing network service faults, providing patches and adding new functions; the deletion of the network service template is the offline of the network services, and so on.

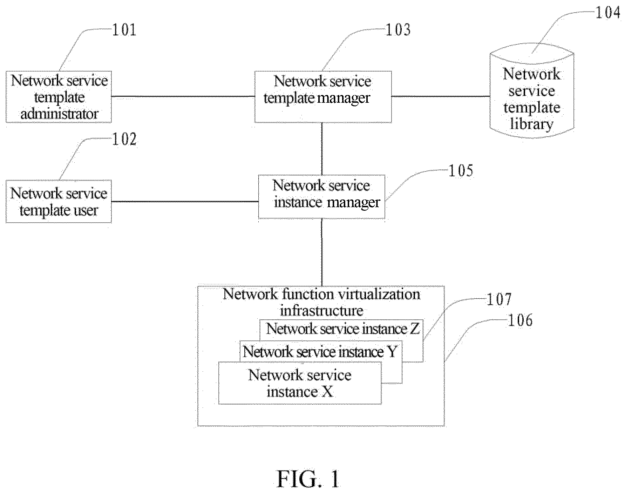

FIG. 1 illustrates a model diagram of the network service management. The model diagram comprises network service template administrator 101, which is response for lifetime management of the network service template, including the registration of the network service template, the modification of the network service template and the deletion of the network service template and the like, the network service template administrator can be the network service template developer, or managing the network service template developed by a third party; the network service template user 102 are users using the network service template to create network services; the network service template manager 103 interacts with the network service template administrator and is responsible for maintaining versions of the network service template; the network service template library 104 is responsible for storing the versions of the network service template; the network service instance manager 105 is responsible for the lifetime management of a network service instance, including the creation of the network service instance, the elastic stretch of the network service instance and the deletion of the network service instance; the network function virtualization infrastructure 106 is an infrastructure responsible for providing computation, storage and network resource for the deployment of network service instances; the network service instance 107 is a network service created by the network service template user through the network service template.

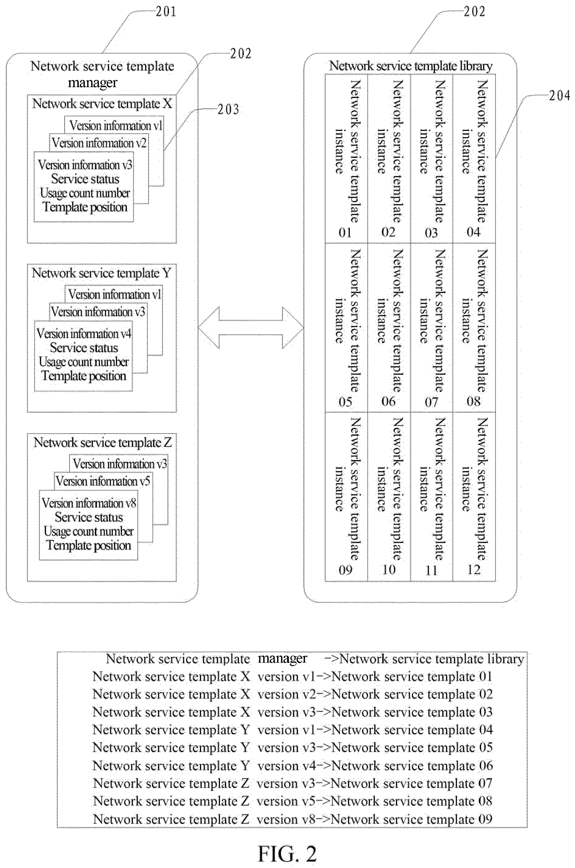

FIG. 2 illustrates a schematic diagram of the network service template management, The figure comprises network service template manager 201, which is responsible for the lifetime management of the network service template, that is, the network service template manager 103 in FIG. 1; the network service template 202 is a template provided to users for creating network services; the network service template version information 203, one network service template may have multiple versions due to modifications by the network service template administrator, the network service template version information records the current status, usage count number, version, and accessible location identifier in the network service template library, of the network service template; the network service template instance 204 is a network service template instance stored in the network service template library.

The US20070294364A1 provides a computer implemented method, data processing system, computer usable program code, and active repository for management of a software service. The document US2011/0320605 is another relevant piece of art.

### Summary of the Invention

A network service template management method according to claim 1 and a network service template manager according to claim 12 are provided to solve the problem that the management style of the network service template has defects in accuracy and flexibility. Further improvements and embodiments are provided in the dependent claims.

### Brief Description of the Drawings

FIG. 1 is a network service management model in the related art;
FIG. 2 is a schematic diagram of management of the versions of a network service template in the related art;
FIG. 3 is a flow chart of a network service template management method provided in a first embodiment of the present invention;
FIG. 4 is a schematic diagram of a network service template registration process in the first embodiment of the present invention;
FIG. 5 is a schematic diagram of a network service template modification process in the first embodiment of the present invention;
FIG. 6 is a schematic diagram of a network service template deletion process in the first embodiment of the present invention;
FIG. 7 is a schematic diagram of a network service instance creation process in the first embodiment of the present invention;
FIG. 8 is a schematic diagram of a network service instance deletion process in the first embodiment of the present invention;
FIG. 9 is a schematic diagram of the process of a network service template manager initiating an activity test in the first embodiment of the present invention;
FIG. 10 is a schematic diagram of the structure of a network service template manager provided in a second embodiment of the present invention.

### Preferred Embodiments of the Invention

Currently, the network function virtualization platform provides lifetime management functions of a network service template, the network service template registered by the network service template administrator can no longer provides the network service template users with the network service creation function because of the life expiration the regulatory reasons and so on, so that the network service template administrator will delete the network service template, but because the network service template may be currently being used by a network service instance that is running, and the network service template manager cannot immediately delete the template from the network service template library. Currently, the network function virtualization implementation method is to judge whether the current network service template is still used by a network service instance, if there is still a network service instance using the network service template, a deletion error is returned, and the deletion is rejected. Because the current network service template administrator is not a network service template user, the network service template administrator cannot determine when there are no users using the network service template to be deleted, and also cannot control subsequent users from continuously using the network service template to create a network service instance.

To solve the abovementioned problem, the embodiment of the present invention provides a network service template management method. Hereinafter, in conjunction with the accompanying drawings, the embodiments of the present invention will be described in detail. It should be noted that, in the case of no conflict, embodiments and features in the embodiments of the present application can be arbitrarily combined with each other.

In the following, in conjunction with the accompanying drawings, the first embodiment of the present invention will be described in detail.

The embodiment of the present invention provides a network service template management method, first it is to set the status of the network service template to manage the network service template, and then to perform operations such as registering, modifying, and deleting on the network service template; a network service instance can be created by using the network service template, the activity of the network service instance is tested after the creation, and the network service instance is released when the network service instance is not needed.

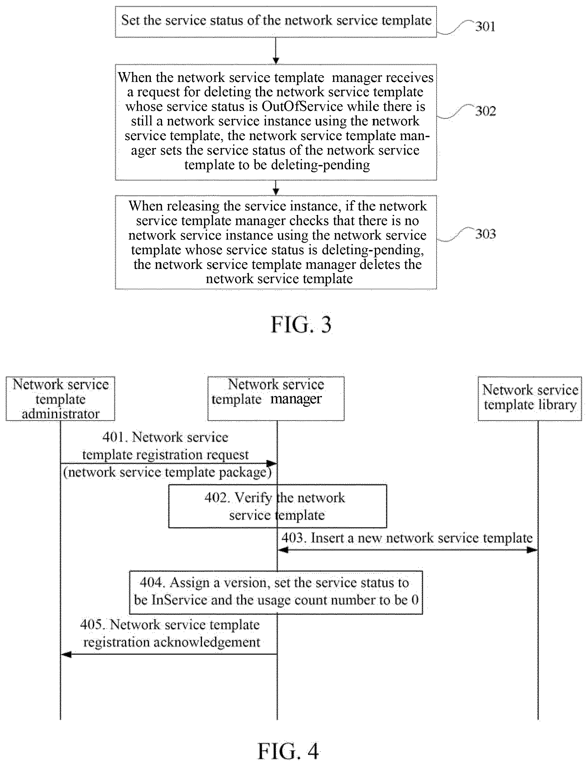

First, an overall process of the network service template management method provided in the embodiment of the present invention will be described, the specific process is shown in FIG. 3, comprising:
in step 301, the network service template manager sets the service status of the network service template;
in the present step, the network service template manager sets the service status for the network service template, specifically, sets the service status of a new version of the network service template generated by newly creating or modifying a network service template to be InService, and sets the service status of the previous version of the network service template to be OutOfService.

In step 302, when the network service template manager receives a request for deleting the network service template whose service status is OutOfService while there is still a network service instance using the network service template, the network service template manager sets the service status of the network service template to deleting-pending.

In step 303, when releasing the service instance, if the network service template manager checks that there is no network service instance using the network service template whose service status is deleting-pending, the network service template manager deletes the network service template;
specifically, when releasing the network service instance, it is to judge whether the network service template used by the network service instance is also used by another network service instance, and if not, it is to delete the network service template.

In the following, the network service template registration process will be described, and the specific process is shown in FIG. 4, comprising:
in step 401, the network service administrator registers the network service template, which comprises the network service template information;
in step 402, the network service template manager verifies the network service template, comprising checking the mandatory parameters, network service external interfaces, and so on;
in step 403, the network service template manager notifies the network service template library to save the network service template.
in step 404, the network service template manager assigns an internally-managed version number to the network service template, sets the service status to be InService and the usage count number to be 0, and records the position information of the network service template in the network service template library.
in step 405, the network service template manager returns a network service template registration acknowledgement message to the network service template administrator.

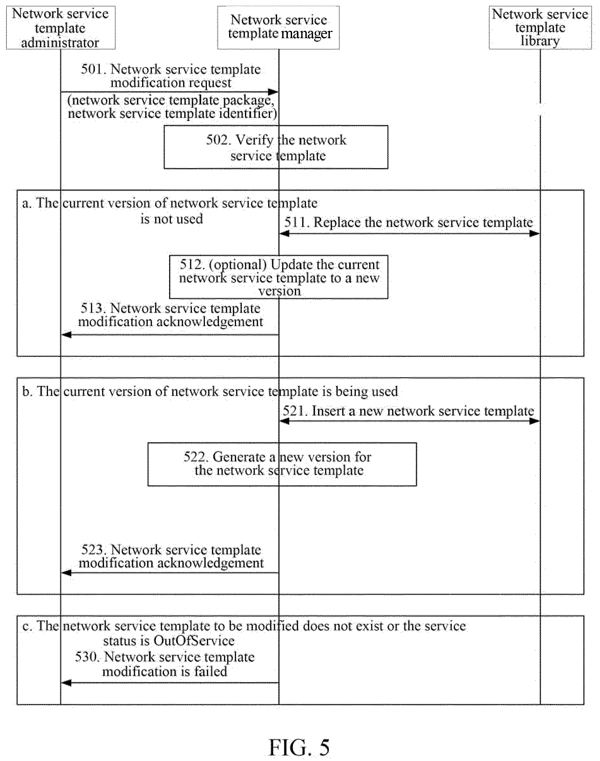

Next, a network service template modification process will be described, the specific process is shown in FIG. 5, comprising:
in step 501, the network service template administrator modifies the network service template, comprising the network service template information and the identifier of the network service template to be modified;
in step 502, the network service template manager verifies the modified network service template package information, comprising, checking the mandatory parameters, the network service external interfaces, whether the network service template to be modified exists and whether it is used by the network service instance and so on;
in this step, when the network service template manager receives a request for modifying the network service template, specifically it comprises the following three cases:
   a. the network service template to be modified is not being used by any network service instance:
      in step 511, the network service template manager notifies the network service template library to replace the network service template.
      in step 512, alternatively, the network service template manager assigns an internally-managed version number to the newly-modified network service template, and updates the version number of the modified network service template. The network service template manager may also continue to use the version number of the modified network service template.
      in step 513, the network service template manager returns a network service template modification acknowledgement message to the network service template administrator.
   b. the network service template to be modified is being used by the network service instance:
      in step 521, the network service template manager notifies the network service template library to generate and insert a new version of the network service template.
      in step 522, the network service template manager generates a new version for the network service template.
      in step 523, the network service template manager returns a network service template modification acknowledgement message to the network service template administrator.
   c. the network service template to be modified does not exist or the service status is OutOfService:
      in step 530, when the service status of the network service template is OutOfService, the network service template manager forbids modifying the network service template, and the network service template manager returns a network service template modification failed message to the network service template administrator.

Preferably, when the service status of the network service template is OutOfService, the network service template manager forbids creating a network service instance through the network service template. But the network service instance already created through the network service template accesses and uses the configuration information of the network service template.

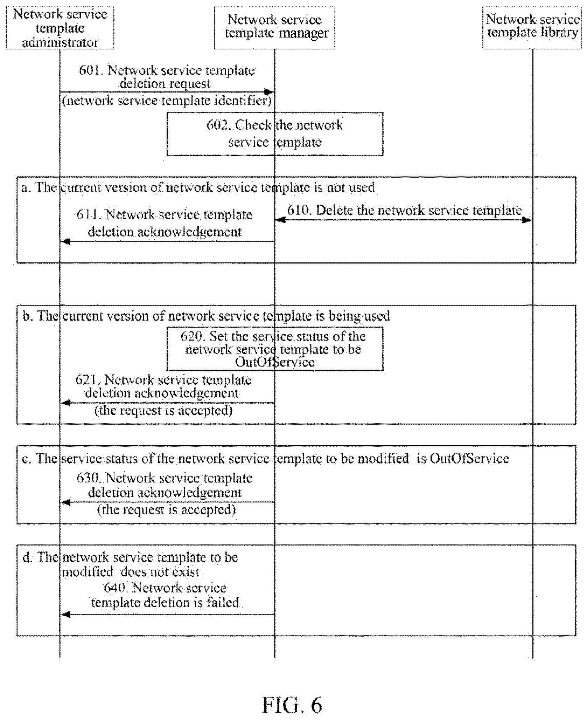

Next, a network service template deletion process will be described, the specific process is shown in FIG. 6, comprising:
in step 601, the network service template administrator deletes the network service template, which comprises the identifier of the network service template to be deleted;
in step 602, the network service template manager verifies the network service template, comprising, checking whether the network service template to be deleted exists;
the present step specifically comprises the following four cases:
   a. the network service template to be deleted is not being used by any network service instance:
      in step 610, the network service template manager notifies the network service template library to delete the network service template.
      in step 611, the network service template manager clears related record information in the network service template, and returns a network service template deletion acknowledgement message to the network service template administrator.
   b. the service status of the network service template to be deleted is InService and the template is being used by the network service instance:
      when receiving a request for deleting the network service template while there is still a network service instance using the network service template, the network service template manager notifies all the network service instances using the network service template that the network service template will be deleted. Specifically:
         in step 620, the network service template manager sets the corresponding recorded network service status of the network service template to be deleted to be OutOfService.
         in step 621, the network service template manager returns a network service template deletion acknowledgement message (the reason carried therein is that the request is accepted) to the network service template administrator.
   c. the service status of the network service template to be deleted is OutOfService (representing that it is being deleted):
      in step 630, the network service template manager returns a network service template deletion acknowledgement message (the reason carried therein is that the request is accepted) to the network service template administrator.

Preferably, the network service instance that receives the notification that the network service template will be deleted may also forward the notification to the network service template user.
d. the network service template to be deleted does not exist:
   in step 640, the network service template manager returns a network service template deletion failed message to the network service template administrator.

The network service template manager deleting the network service template is deleting all the versions of the network service template.

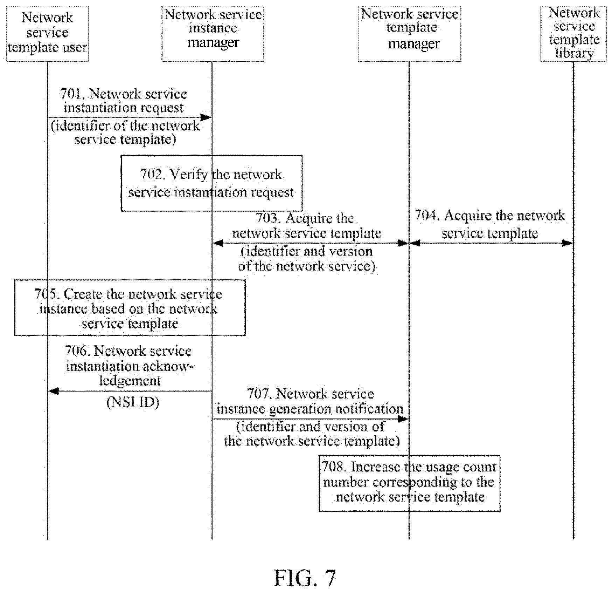

Next, a network service creation process will be described, and specifically shown in FIG. 7, it comprises:
in step 701, a network service template user initiates a network service instantiation request to the network service instance manager, and the request carries the identifier of the network service template;
in step 702, the network service instance manager verifies the network service instantiation request message, comprising, verifying the identifier of the network service template user and the parameters and the policy compliance of the request message.
in step 703-704, the network service instance manager acquires the network service template from the network service template manager, and returns the corresponding version information to the network service instance manager. When any network service template is selected to create the network service, the system uses the latest version of the network service template to create the network service instance.

In step 705, the network service instance manager creates the network service instance based on the network service template and information provided by the network service template user.

In step 706, the network service instance manager returns a network service instantiation acknowledgement message to the network service template user, wherein the message carries the identifier of the created network service instance.

In step 707, the network service instance manager sends the notification message of using the network service template to the network service template manager, wherein the message carries the used network service template and the corresponding version number.

In step 708, the network service template manager increases the usage count number for the corresponding network service template by 1.

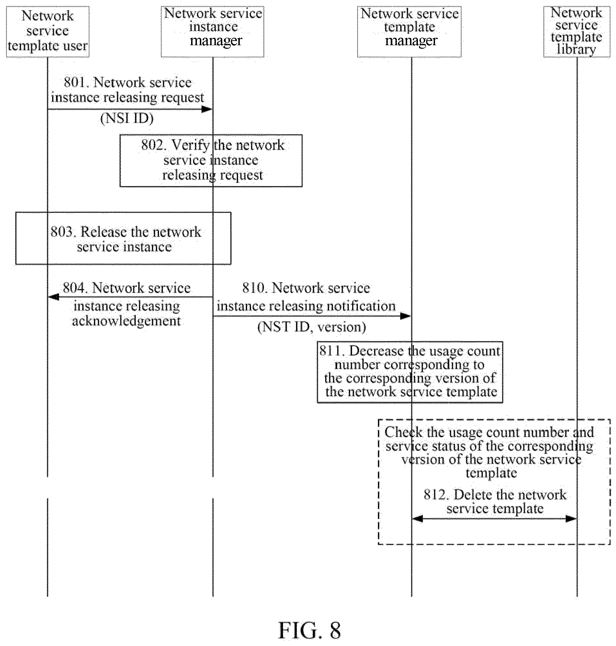

Next, a network service instance release process will be described, and specifically shown in FIG. 8, it comprises:
in step 801, the network service template user initiates a network service instance releasing request to the network service instance manager, wherein the request carries the identifier of the network service instance;
in step 802, the network service instance manager verifies the network service instance releasing request message, comprising, verifying the identifier of the network service template user, the parameters of the request message comprises whether the instance exists.

In step 803, the network service instance manager releases the network service instance and its associated resource.

In step 804, the network service instance manager returns a network service instance releasing acknowledgement message to the network service template user.

The present step specifically comprises:
in step 810, the network service instance manager sends a notification message of no longer using the network service template to the network service template manager, wherein the message carries the used network service template and the corresponding version number.

In step 811, the network service template manager decreases the usage count number of the corresponding network service template by 1.

The network service template manager sets the usage count number of the network service template, and when the network service template is registered, the usage count number is set to 0,
when using the network service template to create a network service instance, the usage count number of the network service template is increased by 1,
when deleting a network service instance, the usage count number of the network service template used by the network service instance is decreased by 1.

In step 812, the network service template manager checks the current usage count number and the service status of the network service template. If the current usage count number of the network service template is 0 and its service status is deleting-pending, the network service template manager notifies the network service template library to delete the network service template.

In the following, the network service instance activity test process will be described, and the network service template manager regularly sends a query message to the network service instance manager and requests the network service instance manager to check whether the network service instance associated to the network service template whose service status is deleting-pending is still InService; when the network service template whose service status is deleting-pending has no associated network service instance that is InService, the network service template manager determines to delete the network service template.

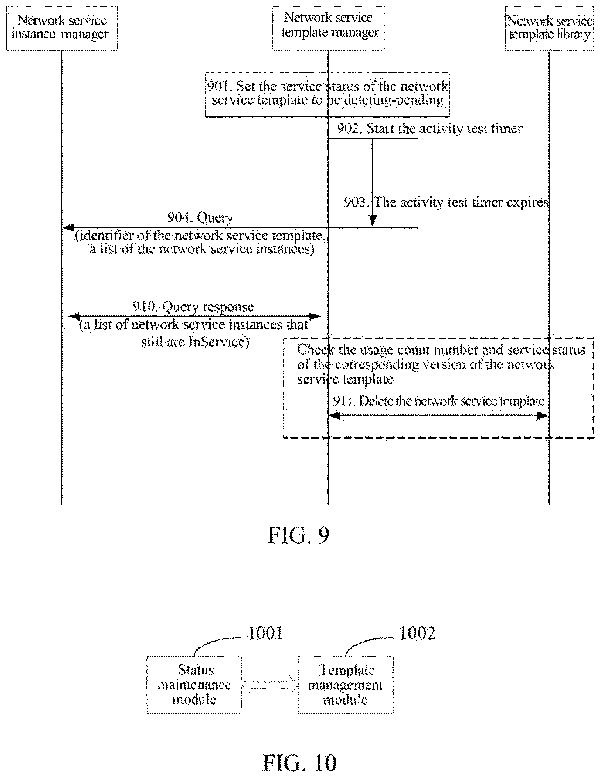

Specifically, as shown in FIG. 9, it comprises:
in step 901, the network service manager receives the request from the network service template administrator for modifying or deleting the network service template and sets the service status of the specified version of the network service template to deleting-pending.

In step 902, the network service template manager is configured to start the activity test timer for the network service template whose service status is set to deleting-pending;
note: the duration is set by the system or set in the network service template.

In step 903, the activity test timer expires, it is to trigger the activity test of the specified version of the network service template.

In step 904, the network service template manager initiates a query message for the specified version of the network service template to the network service instance manager, the message carries the identifier of the network service template and the corresponding list of the network service instances using the network service template;
the present step specifically comprises:
in step 910, the network service instance manager returns a query response message to the network service template manager, wherein the message carries a confirmed list of network service instances which are using the specified version of the network service template.

In step 911, the network service template manager judges the current usage count number and the service status of the network service template. If the current usage count number of the network service template is 0 and the service status is deleting-pending, the network service template manager notifies the network service template library to delete the network service template.

In the following, in conjunction with the accompanying drawings, the second embodiment of the present invention will be described.

The embodiment of the present invention provides a network service template manager, whose structure is shown in FIG. 10, and comprises:
a status maintenance module 1001, is used to set a service status for a network service template;
a template management module 1002, is used to: when receiving a request for deleting a network service template while there is still a network service instance using the network service template, set the service status of the network service template to deleting-pending, or,
when releasing a network service instance, if the network service template manager checks that there is no network service instance using the network service template whose service status is deleting-pending, delete the network service template.

Preferably, the template management module 1002 is further used to: when receiving a request for modifying the network service template, if the current version of the network service template is still used by another network service instance, generate a new version of the network service template.

Preferably, the template management module 1002 is further used to: when receiving a request for modifying the network service template, if the current version of the network service template is not used by another network service instance, update the current version of the network service template.

Preferably, the template management module 1002 is further used to: when the service status of the network service template is OutOfService, forbid modifying the network service template.

Preferably, the template management module 1002 is further used to: when the service status of the network service template is OutOfService, forbid creating the network service instance through the network service template.

Preferably, the template management module 1002 is further used to: regularly send a query message to the network service instance manager, request the network service instance manager to check whether the service template instance associated to the network service template whose service status is deleting-pending is still InService, and when the network service template whose service status is deleting-pending has no associated network service instances that is InService, determine to delete the network service template.

The abovementioned network service template manager can be integrated in a network service template manager, and the network service template manager completes the corresponding functions.

Those ordinarily skilled in the art can understand that all or some of the steps of the abovementioned embodiments may be implemented by using a computer program process, the computer program may be stored in a computer-readable storage medium and the computer program may be executed on an appropriate hardware platform (such as a system, equipment, device, component, and so on), and during the execution, it comprises one of the steps of the method embodiment or a combination thereof.

Alternatively, all or some of the steps of the abovementioned embodiments can also be implemented with integrated circuits, these steps may be made into individual integrated circuit modules respectively, or some of the modules or steps can be made into a single integrated circuit module to implement. Therefore, the present invention is not limited to any specific combinations of hardware and software.

Each device/functional module/functional unit in the abovementioned embodiments may be implemented with universal computing devices, they can be concentrated on a single computing device or distributed on a network composed of a plurality of computing devices.

When each device/functional module/functional unit in the abovementioned embodiments are implemented in the form of software functional module and sold or used as an individual product, they may be stored in a computer readable storage medium. The abovementioned computer-readable storage medium may be a read-only memory, magnetic or optical disk, and the like.

Anyone familiar with the technical field of the art within the technical scope disclosed in the present invention can easily think of changes or replacements that shall fall within the protection scope of the present invention. Therefore, the protection scope of the present invention should be the protection scope of the claims.

### Industrial Applicability

The embodiment of the present invention realizes an accurate and flexible management of the network service template based on the actual usages and solves the problem that the network service template management method has defects in accuracy and flexibility.

## Claims

1. A network service template management method applied to a network function virtualization platform, comprising:
a network service template manager setting a service status for a network service template (S301);
wherein, the network service template is a template provided to users for creating network services; and being **characterised by** when the network service template manager receives a request for deleting a network service template whose service status is OutOfService while there is still a network service instance using the network service template, the network service template manager setting the service status of the network service template to deleting-pending (S302);
when releasing a network service instance, if the network service template manager checks that there is no network service instance using the network service template whose service status is deleting-pending, the network service template manager deleting the network service template (S303); wherein the network service instance is a network service created by a network service template user through the network service template.

2. The network service template management method of claim 1, wherein, the method further comprises:
when the network service template manager receives a request for modifying the network service template, if a current version of the network service template is used by another network service instance, the network service template manager generating a new version of the network service template.

3. The network service template management method of claim 1, wherein, the method further comprises:
when the network service template manager receives a request for modifying the network service template, if a current version of the network service template is not used by another network service instance, the network service template manager updating the current version of the network service template.

4. The network service template management method of claim 1, wherein, the method further comprises:
the network service template manager deleting the network service template is deleting all versions of the network service template.

5. The network service template management method of claim 3, wherein, the method further comprises:
the network service template manager setting a new version number for the modified network server template.

6. The network service template management method of claim 1, wherein,
when a service status of a network service template is OutOfService, the network service template manager forbids modifying the network service template,
Or,
wherein,
when a service status of a network service template is OutOfService, the network service template manager forbids creating a network service instance through the network service template.

7. The network service template management method of claim 1, wherein,
when the service status of the network service template is OutOfService, a network service instance created by the network service template is still able to access and use configuration information of the network service template.

8. The network service template management method of claim 2 or 3, wherein,
when any network service template is selected to create a network service, the network service template manager uses a latest version of the network service template to create the network service instance.

9. The network service template management method of claim 1, wherein, the method further comprises:
the network service template manager setting a usage count number for the network service template, when the network service template is registered, the usage count number being set to 0,
when using the network service template to create a network service instance, the usage count number for the network service template being incremented by 1,
when deleting a network service instance, the usage count number for the network service template used by the network service instance being decremented by 1,
and, wherein, the method further comprises:
after deleting the network service instance, when the usage count number for the network service template used by the deleted network service instance is 0 and when the service status of the network service template is deleting-pending, the network service template manager deleting the network service template.

10. The network service template management method of claim 1, wherein, the method further comprises:
when receiving a request for deleting the network service template and there is still a network service instance using the network service template, the network service template manager notifying all network service instances using the network service template that the network service template will be deleted,
and, wherein, after the step of the network service template manager notifying all network service instances using the network service template that the network service template will be deleted, the method further comprises:
a network service instance that receives the notification that the network service template will be deleted forwarding the notification to a network service template user.

11. The network service template management method of claim 1, wherein, the method further comprises:
the network service template manager regularly sending a query message to a network service instance manager and requesting the network service instance manager to check whether a network service instance associated with the network service template whose service status is deleting-pending is still InService;
when the network service template whose service status is deleting-pending has no associated network service instance that is InService, the network service template manager determining to delete the network service template.

12. A network service template manager applied to a network function virtualization platform, comprising:
a status maintenance module (1001), configured to: set a service status for a network service template; wherein, the network service template is a template provided to users for creating network services; **characterised by** a template management module (1002), configured to: when receiving a request for deleting a network service template while there is still a network service instance using the network service template, set the service status of the network service template to deleting-pending, or,
when releasing the network service instance, if the network service template manager checks that there is no network service instance using the network service template whose service status is deleting-pending, delete the network service template; wherein the network service instance is a network service created by a network service template user through the network service template.

13. The network service template manager of claim 12, wherein,
the template management module (1002) is further configured to: when receiving a request for modifying the network service template, if a current version of the network service template is still used by another network service instance, generate a new version of the network service template,
or,
wherein,
the template management module (1002) is further configured to: when receiving a request for modifying the network service template, if a current version of the network service template is not used by another network service instance, update the current version of the network service template.

14. The network service template manager of claim 12, wherein,
the template management module (1002) is further configured to: when a service status of a network service template is OutOfService, forbid modifying the network service template,
or,
wherein,
the template management module (1002) is further configured to: when a service status of a network service template is OutOfService, forbid creating a network service instance through the network service template.

15. The network service template manager of claim 12, wherein,
the template management module (1002) is further configured to: regularly send a query message to a network service instance manager, request the network service instance manager to check whether a service template instance associated with the network service template whose service status is deleting-pending is still InService, and when the network service template has no associated network service instance that is InService, determine to delete the network service template.

## Patentansprüche

1. Netzwerkdienstschablonenmanagement-Verfahren, das auf eine Netzwerkfunktionsvirtualisierungsplattform angewendet wird, und das Folgendes umfasst:
einen Netzwerkdienstschablonenmanager, der einen Dienststatus für eine Netzwerkdienstschablone einstellt (S301);
wobei die Netzwerkdienstschablone eine Schablone ist, die Nutzern zum Erstellen von Netzwerkdiensten angeboten wird;
und **dadurch gekennzeichnet, dass**:
wenn der Netzwerkdienstschablonenmanager eine Anforderung zum Löschen einer Netzwerkdienstschablone empfängt, deren Dienststatus OutOfService ist, während es noch eine Netzwerkdienstinstanz gibt, die die Netzwerkdienstschablone verwendet, der Netzwerkdienstschablonenmanager den Dienststatus der Netzwerkdienstschablone auf "Löschen anhängig" einstellt (S302);
wenn eine Netzwerkdienstinstanz freigegeben wird, und wenn der Netzwerkdienstschablonenmanager überprüft, dass es keine Netzwerkdienstinstanz gibt, die die Netzwerkdienstschablone verwendet, deren Dienststatus "Löschen anhängig" ist, der Netzwerkdienstschablonenmanager die Netzwerkdienstschablone löscht (S303);
wobei die Netzwerkdienstinstanz ein Netzwerkdienst ist, der durch einen Netzwerkdienstschablonennutzer mittels der Netzwerkdienstschablone erstellt wurde.

2. Netzwerkdienstschablonenmanagementverfahren nach Anspruch 1, wobei das Verfahren des Weiteren umfasst, dass:
wenn der Netzwerkdienstschablonenmanager eine Anforderung zum Modifizieren der Netzwerkdienstschablone empfängt, und wenn eine momentane Version der Netzwerkdienstschablone durch eine weitere Netzwerkdienstinstanz verwendet wird, der Netzwerkdienstschablonenmanager eine neue Version der Netzwerkdienstschablone erstellt.

3. Netzwerkdienstschablonenmanagementverfahren nach Anspruch 1, wobei das Verfahren des Weiteren umfasst, dass:
wenn der Netzwerkdienstschablonenmanager eine Anforderung zum Modifizieren der Netzwerkdienstschablone empfängt, und wenn eine momentane Version der Netzwerkdienstschablone durch keine weitere Netzwerkdienstinstanz verwendet wird, der Netzwerkdienstschablonenmanager die momentane Version der Netzwerkdienstschablone aktualisiert.

4. Netzwerkdienstschablonenmanagementverfahren nach Anspruch 1, wobei das Verfahren des Weiteren umfasst, dass:
der Netzwerkdienstschablonenmanager, der die Netzwerkdienstschablone löscht, alle Versionen der Netzwerkdienstschablone löscht.

5. Netzwerkdienstschablonenmanagementverfahren nach Anspruch 3, wobei das Verfahren des Weiteren umfasst, dass:
der Netzwerkdienstschablonenmanager eine neue Versionsnummer für die modifizierte Netzwerkserverschablone einstellt.

6. Netzwerkdienstschablonenmanagementverfahren nach Anspruch 1, wobei,
wenn ein Dienststatus einer Netzwerkdienstschablone OutOfService ist, der Netzwerkdienstschablonenmanager das Modifizieren der Netzwerkdienstschablone verbietet,
oder wobei,
wenn ein Dienststatus einer Netzwerkdienstschablone OutOfService ist, der Netzwerkdienstschablonenmanager das Erstellen einer Netzwerkdienstinstanz durch die Netzwerkdienstschablone verbietet.

7. Netzwerkdienstschablonenmanagementverfahren nach Anspruch 1, wobei,
wenn der Dienststatus der Netzwerkdienstschablone OutOfService ist, eine durch die Netzwerkdienstschablone erstellte Netzwerkdienstinstanz immer noch in der Lage ist, Konfigurationsinformationen der Netzwerkdienstschablone abzurufen und zu verwenden.

8. Netzwerkdienstschablonenmanagementverfahren nach Anspruch 2 oder 3, wobei,
wenn irgendeine Netzwerkdienstschablone ausgewählt wird, um einen Netzwerkdienst zu erstellen, der Netzwerkdienstschablonenmanager eine neueste Version der Netzwerkdienstschablone zum Erstellen der Netzwerkdienstinstanz verwendet.

9. Netzwerkdienstschablonenmanagementverfahren nach Anspruch 1, wobei das Verfahren des Weiteren umfasst, dass:
der Netzwerkdienstschablonenmanager eine Nutzungszählzahl für die Netzwerkdienstschablone einstellt, wenn die Netzwerkdienstschablone registriert wird, wobei die Nutzungszählzahl auf 0 eingestellt wird,
wenn die Netzwerkdienstschablone zum Erstellen einer Netzwerkdienstinstanz verwendet wird, die Nutzungszählzahl für die Netzwerkdienstschablone um 1 inkrementiert wird,
wenn eine Netzwerkdienstinstanz gelöscht wird, die Nutzungszählzahl für die durch die Netzwerkdienstinstanz verwendete Netzwerkdienstschablone um 1 dekrementiert wird, und
wobei das Verfahren des Weiteren umfasst, dass:
nach dem Löschen der Netzwerkdienstinstanz, wenn die Nutzungszählzahl für die durch die gelöschte Netzwerkdienstinstanz verwendete Netzwerkdienstschablone 0 ist, und wenn der Dienststatus der Netzwerkdienstschablone "Löschen anhängig" ist, der Netzwerkdienstschablonenmanager die Netzwerkdienstschablone löscht.

10. Netzwerkdienstschablonenmanagementverfahren nach Anspruch 1, wobei das Verfahren des Weiteren umfasst, dass:
wenn eine Anforderung zum Löschen der Netzwerkdienstschablone empfangen wird und es immer noch eine Netzwerkdienstinstanz gibt, die die Netzwerkdienstschablone verwendet, der Netzwerkdienstschablonenmanager alle Netzwerkdienstinstanzen, die die Netzwerkdienstschablone verwenden, benachrichtigt, dass die Netzwerkdienstschablone gelöscht werden wird,
und wobei nach dem Schritt, in dem der Netzwerkdienstschablonenmanager alle Netzwerkdienstinstanzen, die die Netzwerkdienstschablone verwenden, benachrichtigt, dass die Netzwerkdienstschablone gelöscht werden wird, das Verfahren des Weiteren umfasst, dass:
eine Netzwerkdienstinstanz, die die Benachrichtigung, dass die Netzwerkdienstschablone gelöscht werden wird, empfängt, die Benachrichtigung an einen Netzwerkdienstschablonennutzer weiterleitet.

11. Netzwerkdienstschablonenmanagementverfahren nach Anspruch 1, wobei das Verfahren des Weiteren umfasst, dass:
der Netzwerkdienstschablonenmanager regelmäßig eine Abfragenachricht an einen Netzwerkdienstinstanzmanager sendet und den Netzwerkdienstinstanzmanager auffordert zu überprüfen, ob eine Netzwerkdienstinstanz, die der Netzwerkdienstschablone zugeordnet ist, deren Dienststatus "Löschen anhängig" ist, immer noch InService ist;
wenn die Netzwerkdienstschablone, deren Dienststatus "Löschen anhängig" ist, keine zugeordnete Netzwerkdienstinstanz hat, die InService ist, der Netzwerkdienstschablonenmanager bestimmt, die Netzwerkdienstschablone zu löschen.

12. Netzwerkdienstschablonenmanager, der auf eine Netzwerkfunktionsvirtualisierungsplattform angewendet wird, und der Folgendes umfasst:
ein Statusaufrechterhaltungsmodul (1001), das dafür konfiguriert ist, einen Dienststatus für eine Netzwerkdienstschablone einzustellen, wobei die Netzwerkdienstschablone eine Schablone ist, die Nutzern zum Erstellen von Netzwerkdiensten angeboten wird;
**gekennzeichnet durch**:
ein Schablonenmanagementmodul (1002), das dafür konfiguriert ist, wenn eine Anforderung zum Löschen einer Netzwerkdienstschablone empfangen wird, während es immer noch eine Netzwerkdienstinstanz gibt, die die Netzwerkdienstschablone verwendet, den Dienststatus der Netzwerkdienstschablone auf "Löschen anhängig" einzustellen, oder
wenn die Netzwerkdienstinstanz freigegeben wird, und wenn der Netzwerkdienstschablonenmanager überprüft, dass es keine Netzwerkdienstinstanz gibt, die die Netzwerkdienstschablone verwendet, deren Dienststatus "Löschen anhängig" ist, die Netzwerkdienstschablone gelöscht wird; wobei die Netzwerkdienstinstanz ein Netzwerkdienst ist, der durch einen Netzwerkdienstschablonennutzer mittels der Netzwerkdienstschablone erstellt wurde.

13. Netzwerkdienstschablonenmanager nach Anspruch 12, wobei
das Schablonenmanagementmodul (1002) des Weiteren dafür konfiguriert ist, wenn eine Anforderung zum Modifizieren der Netzwerkdienstschablone empfangen wird, und wenn eine momentane Version der Netzwerkdienstschablone immer noch durch eine weitere Netzwerkdienstinstanz verwendet wird, eine neue Version der Netzwerkdienstschablone zu erstellen,
oder wobei
das Schablonenmanagementmodul (1002) des Weiteren dafür konfiguriert ist, wenn eine Anforderung zum Modifizieren der Netzwerkdienstschablone empfangen wird, und wenn eine momentane Version der Netzwerkdienstschablone durch keine weitere Netzwerkdienstinstanz verwendet wird, die momentane Version der Netzwerkdienstschablone zu aktualisieren.

14. Netzwerkdienstschablonenmanager nach Anspruch 12, wobei
das Schablonenmanagementmodul (1002) des Weiteren dafür konfiguriert ist, wenn ein Dienststatus einer Netzwerkdienstschablone OutOfService ist, das Modifizieren der Netzwerkdienstschablone zu verbieten,
oder wobei
das Schablonenmanagementmodul (1002) des Weiteren dafür konfiguriert ist, wenn ein Dienststatus einer Netzwerkdienstschablone OutOfService ist, das Erstellen einer Netzwerkdienstinstanz mittels der Netzwerkdienstschablone zu verbieten.

15. Netzwerkdienstschablonenmanager nach Anspruch 12, wobei
das Schablonenmanagementmodul (1002) des Weiteren dafür konfiguriert ist, regelmäßig eine Abfragenachricht an einen Netzwerkdienstinstanzmanager zu senden und den Netzwerkdienstinstanzmanager aufzufordern zu überprüfen, ob eine Dienstschabloneninstanz, die der Netzwerkdienstschablone zugeordnet ist, deren Dienststatus "Löschen anhängig" ist, immer noch InService ist, und wenn die Netzwerkdienstschablone keine zugeordnete Netzwerkdienstinstanz hat, ist InService das, zu bestimmen, die Netzwerkdienstschablone zu löschen.

## Revendications

1. Procédé de gestion de modèle de service de réseau appliqué à une plate-forme de virtualisation de fonction de réseau, comprenant :
un gestionnaire de modèle de service de réseau réglant un statut de service pour un modèle de service de réseau (S301) ;
dans lequel le modèle de service de réseau est un modèle fourni à des utilisateurs pour créer des services de réseau ;
et **caractérisé par**
lorsque le gestionnaire de modèle de service de réseau reçoit une demande de suppression d'un modèle de service de réseau dont un statut de service est hors service, OutOfService, pendant qu'il y a toujours une instance de service de réseau qui utilise le modèle de service de réseau, le gestionnaire de modèle de service de réseau réglant le statut de service du modèle de service de réseau à suppression en attente (S302) ;
lors de la libération d'une instance de service de réseau, si le gestionnaire de modèle de service de réseau vérifie qu'il n'y a pas d'instance de service de réseau qui utilise le modèle de service de réseau dont le statut de service est suppression en attente, le gestionnaire de modèle de service de réseau supprimant le modèle de service de réseau (S303) ; dans lequel l'instance de service de réseau est un service de réseau créé par un utilisateur de modèle de service de réseau par l'intermédiaire du modèle de service de réseau.

2. Procédé de gestion de modèle de service de réseau selon la revendication 1, dans lequel le procédé comprend en outre :
lorsque le gestionnaire de modèle de service de réseau reçoit une demande de modification du modèle de service de réseau, si une version actuelle du modèle de service de réseau est utilisée par une autre instance de service de réseau, le gestionnaire de modèle de service de réseau générant une nouvelle version du modèle de service de réseau.

3. Procédé de gestion de modèle de service de réseau selon la revendication 1, dans lequel le procédé comprend en outre :
lorsque le gestionnaire de modèle de service de réseau reçoit une demande de modification du modèle de service de réseau, si une version actuelle du modèle de service de réseau n'est pas utilisée par une autre instance de service de réseau, le gestionnaire de modèle de service de réseau mettant à jour la version actuelle du modèle de service de réseau.

4. Procédé de gestion de modèle de service de réseau selon la revendication 1, dans lequel le modèle comprend en outre :
le gestionnaire de modèle de service de réseau supprimant le modèle de service de réseau supprime toutes les versions du modèle de service de réseau.

5. Procédé de gestion de modèle de service de réseau selon la revendication 3, dans lequel le procédé comprend en outre :
le gestionnaire de modèle de service de réseau réglant un nouveau numéro de version pour le modèle de service de réseau modifié.

6. Procédé de gestion de modèle de service de réseau selon la revendication 1, dans lequel
lorsqu'un statut de service d'un modèle de service de réseau est OutOfService, le gestionnaire de modèle de service de réseau interdit toute modification du modèle de service de réseau,
ou dans lequel
lorsqu'un statut de service d'un modèle de service de réseau est OutOfService, le gestionnaire de modèle de service de réseau interdit toute création d'une instance de service de réseau par l'intermédiaire du modèle de service de réseau.

7. Procédé de gestion de modèle de service de réseau selon la revendication 1, dans lequel
lorsque le statut de service du modèle de service de réseau est OutOfService, une instance de service de réseau créée par le modèle de service de réseau est toujours capable d'accéder aux informations de configuration du modèle de service de réseau et de les utiliser.

8. Procédé de gestion de modèle de service de réseau selon la revendication 2 ou 3, dans lequel
lorsqu'un modèle de service de réseau est sélectionné pour créer un service de réseau, le gestionnaire de modèle de service de réseau utilise la plus récente version du modèle de service de réseau pour créer l'instance de service de réseau.

9. Procédé de gestion de modèle de service de réseau selon la revendication 1, dans lequel le procédé comprend en outre :
le gestionnaire de modèle de service de réseau réglant un numéro de décompte d'utilisation pour le modèle de service de réseau, et, lorsque le modèle de service de réseau est enregistré, le numéro de décompte d'utilisation étant réglé à 0,
lors de l'utilisation du modèle de service de réseau pour créer une instance de service de réseau, le numéro de décompte d'utilisation pour le modèle de service de réseau étant incrémenté de 1,
lors de la suppression d'une instance de service de réseau, le numéro de décompte d'utilisation pour le modèle de service de réseau utilisé par l'instance de service de réseau étant décrémenté de 1,
et dans lequel le procédé comprend en outre :
après la suppression de l'instance de service de réseau, lorsque le numéro de décompte d'utilisation pour le modèle de service de réseau utilisé par l'instance de service de réseau supprimée est 0 et lorsque le statut de service du modèle de service de réseau est suppression en attente, le gestionnaire de modèle de service de réseau supprimant le modèle de service de réseau.

10. Procédé de gestion de modèle de service de réseau selon la revendication 1, dans lequel le procédé comprend en outre :
lors de la réception d'une demande de suppression du modèle de service de réseau et lorsqu'il y a toujours une instance de service de réseau utilisant le modèle de service de réseau, le gestionnaire de modèle de service de réseau notifiant à toutes les instances de service de réseau utilisant le modèle de service de réseau que le modèle de service de réseau va être supprimé,
et, dans lequel, après l'étape du gestionnaire de modèle de service de réseau notifiant à toutes les instances de service de réseau utilisant le modèle de service de réseau que le modèle de service de réseau va être supprimé, le procédé comprend en outre :
une instance de service de réseau qui reçoit la notification que le modèle de service de réseau va être supprimé transférant la notification à un utilisateur de modèle de service de réseau.

11. Procédé de gestion de modèle de service de réseau selon la revendication 1, dans lequel le procédé comprend en outre :
le gestionnaire de modèle de service de réseau envoyant régulièrement un message d'interrogation à un gestionnaire d'instance de service de réseau et demandant au gestionnaire d'instance de service de réseau de vérifier si une instance de service de réseau associée au modèle de service de réseau dont le statut de service est suppression en attente est toujours en service, InService ;
lorsque le modèle de service de réseau dont le statut de service est suppression en attente n'a pas d'instance de service de réseau associée qui est InService, le gestionnaire de modèle de service de réseau déterminant de supprimer le modèle de service de réseau.

12. Gestionnaire de modèle de service de réseau appliqué à une plate-forme de virtualisation de fonction de réseau, comprenant :
un module de maintenance de statut (1001) configuré pour régler un statut de service pour un modèle de service de réseau ; dans lequel le modèle de service de réseau est un modèle fourni à des utilisateurs pour créer des services de réseau ;
**caractérisé par**
un module de gestion de modèle (1002) configuré pour : lors de la réception d'une demande de suppression d'un modèle de service de réseau pendant qu'il y a une instance de service de réseau qui utilise le modèle de service de réseau, régler le statut de service du modèle de service de réseau à suppression en attente, ou
lors de la libération de l'instance de service de réseau, si le gestionnaire de modèle de service de réseau vérifie qu'il n'y a pas d'instance de service de réseau qui utilise le modèle de service de réseau dont le statut de service est suppression en attente, supprimer le modèle de service de réseau ; dans lequel l'instance de service de réseau est un service de réseau créé par un utilisateur de modèle de service de réseau par l'intermédiaire du modèle de service de réseau.

13. Gestionnaire de modèle de service de réseau selon la revendication 12, dans lequel
le module de gestion de modèle (1002) est en outre configuré pour :
lors de la réception d'une demande de modification du modèle de service de réseau, si une version actuelle du modèle de service de réseau est toujours utilisée par une autre instance de service de réseau, générer une nouvelle version du modèle de service de réseau,
ou dans lequel
le module de gestion de modèle (1002) est en outre configuré pour : lors de la réception d'une demande de modification du modèle de service de réseau, si une version actuelle du modèle de service de réseau n'est pas utilisée par une autre instance de service de réseau, la mise à jour de la version actuelle du modèle de service de réseau.

14. Gestionnaire de modèle de service de réseau selon la revendication 12, dans lequel
le module de gestion de modèle (1002) est en outre configuré pour : lorsqu'un statut de service d'un modèle de service de réseau est OutOfService, interdire toute modification du modèle de service de réseau,
ou dans lequel
le module de gestion de modèle (1002) est en outre configuré pour : lorsqu'un statut de service d'un modèle de service de réseau est OutOfService, interdire toute création d'une instance de service de réseau par l'intermédiaire du modèle de service de réseau.

15. Gestionnaire de modèle de service de réseau selon la revendication 12, dans lequel
le module de gestion de modèle (1002) est en outre configuré pour : envoyer régulièrement un message d'interrogation à un gestionnaire d'instance de service de réseau, demander au gestionnaire d'instance de service de réseau de vérifier si une instance de service de réseau associée au modèle de service de réseau dont le statut de service est suppression en attente est toujours InService, et, lorsque le modèle de service de réseau n'a pas d'instance de service de réseau associée qui est InService, déterminer de supprimer le modèle de service de réseau.
